Europäisches Patentamt

European Patent Office

Office européen des brevets

(11) Veröffentlichungsnummer: **0 300 188 B1**

(19)

## (12) EUROPÄISCHE PATENTSCHRIFT

(45) Veröffentlichungstag der Patentschrift: **05.08.92**

(51) Int. Cl.⁵: **A62C 3/02**, B64D 1/16

(21) Anmeldenummer: **88109361.1**

(22) Anmeldetag: **13.06.88**

(54) **Vorrichtung zum Anhängen eines Transportbehälters an ein Luftfahrzeug.**

(30) Priorität: **19.06.87 CH 2319/87**

(43) Veröffentlichungstag der Anmeldung:
**25.01.89 Patentblatt 89/04**

(45) Bekanntmachung des Hinweises auf die
Patenterteilung:
**05.08.92 Patentblatt 92/32**

(84) Benannte Vertragsstaaten:
**AT DE ES FR GB IT SE**

(56) Entgegenhaltungen:
**EP-A- 0 004 955**
**EP-A- 0 073 956**
**DE-B- 1 280 680**
**US-A- 3 248 074**
**US-A- 3 688 952**

(73) Patentinhaber: **AIR-ZERMATT AG**
**Postfach**
**CH-3920 Zermatt(CH)**

(72) Erfinder: **Perren, Beat H.**
**Hofmattstrasse**
**CH-3920 Zermatt(CH)**
Erfinder: **Rossi, Albino**
**Via Arno 14**
**I-21055 Gorla Minore(IT)**

(74) Vertreter: **Keller, René, Dr. et al**
**Patentanwälte Dr. René Keller & Partner**
**Postfach 12**
**CH-3000 Bern 7(CH)**

## Beschreibung

Die Erfindung bezieht sich auf eine Transporteinrichtung zum Anhängen eines Transportbehälters an ein Luftfahrzeug, insbesondere einen Helikopter, mit einem an das Luftfahrzeug zu hängenden Tragbügel, der den um eine horizontale Achse drehbaren Transportbehälter und einen Drehantrieb für diesen trägt.

Bekannte Einrichtungen dieser Gattung dienen zur Brandbekämpfung, wobei der Behälter durch Eintauchen in ein offenes Gewässer gefüllt, zur Brandstelle geflogen und dort entleert wird. Bei einer solchen Einrichtung (US-A-3 248 074) ist der Schwerpunkt sowohl des leeren als auch des gefüllten Behälters unterhalb der Drehachse, so dass der Behälter stets im stabilen Gleichgewicht ist und nach einer Drehung von selbst in die Ruhelage zurückkehrt. Am Behälter ist ein Hebelarm befestigt, an dem ein Zugseil zum Drehen des Behälters angreift. Bei einer anderen Einrichtung dieser Gattung (EP-A-0 004 955) liegt in Ruhestellung des Behälters die Drehachse über seinem Schwerpunkt, wenn der Behälter leer ist, aber unter seinem Schwerpunkt, wenn der Behälter gefüllt ist. Der dabei im gefüllten Zustand im labilen Gleichgewicht befindliche Behälter ist von einer vom Luftfahrzeug aus lösbaren Arretiervorrichtung gegen eine Drehung gesichert. Wenn die Arretierung gelöst wird, dreht sich der gefüllte Behälter von selbst plötzlich um nahezu 180° und entleert sich, wobei sein Zustand labil wird, so dass er von selbst in seine im leeren Zustand stabile Lage zurückkehrt, in der die Arretierung einrastet und ihn wieder gegen eine Drehung sichrt.

Aus einem offenen Gewässer kann der Behälter dieser bekannten Einrichtungen schnell mit Wasser gefüllt werden. Steht jedoch nur eine Wasserleitung zur Verfügung oder soll statt Löschwasser ein anderes Transportgut transportiert werden, so geht beim Füllen des Behälters wertvolle Brandbekämpfungszeit und in jedem Falle kostspielige Einsatzzeit des Luftfahrzeugs beim Füllen des Behälters verloren. Um das zu vermeiden, hätte man bisher mindestens zwei Transporteinrichtungen dieser Gattung vorsehen müssen, um jeweils eine Einrichtung mit gefülltem Behälter an das Flugzeug zu hängen und zu transportieren, während der Behälter der anderen Einrichtung gefüllt wird. Das würde nicht nur zwei vollständige Einrichtungen erfordern. Beim Lösen einer Einrichtung vom Luftfahrzeug und beim Anhängen der anderen müssten jeweils auch die Mittel der einen Einrichtung vom Luftfahrzeug gelöst und die Mittel der anderen angeschlossen werden, die für die Drehung oder das Auslösen der Drehung vorgesehen sind. Auch das ist zeitaufwendig, und die Verbindungen müssen gewissenhaft ausgeführt werden, da Fehler, je nach der Art der betreffenden Mittel, zu Schwierigkeiten beim Entleeren oder sogar zu einem unbeabsichtigten Entleeren des Behälters mit unter Umständen schwerwiegenden Folgen führen können.

Hier will die Erfindung Abhilfe schaffen. Die Erfindung, wie sie im Patentanspruch 1 gekennzeichnet ist, löst die Aufgabe, eine Transporteinrichtung zum Anhängen eines Transportbehälters an ein Luftfahrzeug zu schaffen, deren Beladen nur einen vernachlässigbaren Teil der Einsatzzeit des Luftfahrzeuges beansprucht.

Die durch die Erfindung erreichten Vorteile sind im wesentlichen darin zu sehen, dass das Luftfahrzeug, insbesondere ein Helikopter, nur während eines nicht ins Gewicht fallenden Teiles seiner Einsatzzeit schwebend gehalten werden muss, während der von einem Transportflug leer zurückgebrachte Transportbehälter durch einen mit Transportgut gefüllten Transportbehälter ersetzt wird. Dies ermöglicht es, nicht nur Wasser aus einem offenen Gewässer sondern allgemein flüssiges oder fliessfähiges Gut, wie Sand, Kies, Beton, Schnee, Erde, Mist, Dünger und auch im Behälter transportierbares Stückgut kostengünstig insbesondere an im Gelände schwer zugängliche Stellen zu transportieren. In den abhängigen Patentansprüchen sind besondere Ausführungsarten der Erfindung angegeben und weitere Vorteile ersichtlich.

Im folgenden wird die Erfindung anhand der beiliegenden, lediglich zwei Ausführungswege darstellenden, schematischen Zeichnungen näher erläutert. Es zeigen:

| Fig. 1 | eine Vorderansicht einer ersten Ausführungsart der Einrichtung, |
| Fig. 2 | eine Seitenansicht in Blickrichtung II in Fig. 1 und 3, |
| Fig. 3 | eine Draufsicht zu Fig. 1 und 2, |
| Fig. 4 | eine Vorderansicht einer zweiten Ausführungsart der Transporteinrichtung, |
| Fig. 5 | eine Seitenansicht in Blickrichtung V in Fig. 4, |
| Fig. 6 und 7 | einen Schnitt nach der Linie VI-VI in Fig. 5, in aufgegliederter Darstellung grösseren Massstabs, |
| Fig. 8 | eine Ansicht in Blickrichtung VIII in Fig. 6, |
| Fig. 9 und 10 | einen Schnitt nach der Linie IX-IX in Fig. 5, in aufgegliederter Darstellung grösseren Massstabs, |
| Fig. 11 | eine Ansicht in Blickrichtung XI in Fig. 9. |

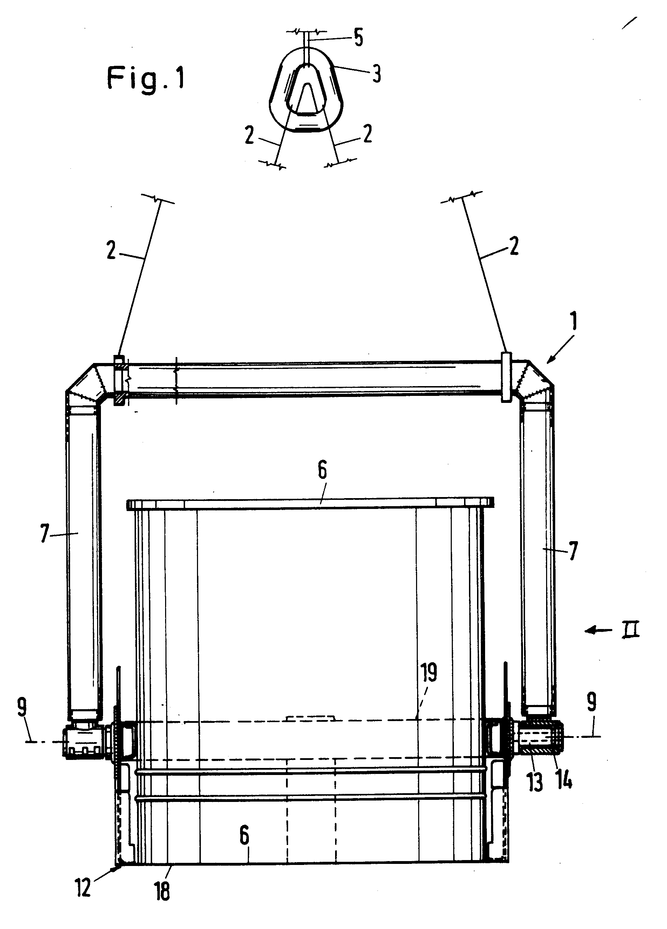

Die in Fig. 1-3 dargestellte Einrichtung besteht in ihrem grundsätzlichen Aufbau aus einem Tragbügel 1, der an zwei Tragseilen 2 hängt, die durch ein Verbindungselement 3 mit dem Lastseil 5 eines nicht dargestellten Helikopters verbunden sind, und einem Transportbehälter 6, der an den Schenkeln 7 des Tragbügels 1 um eine horizontale Drehachse 9 drehbar gehalten ist, und einem Drehantrieb mit zwei Zylinder-Kolben-Einheiten 10 zum Drehen des Behälters 6.

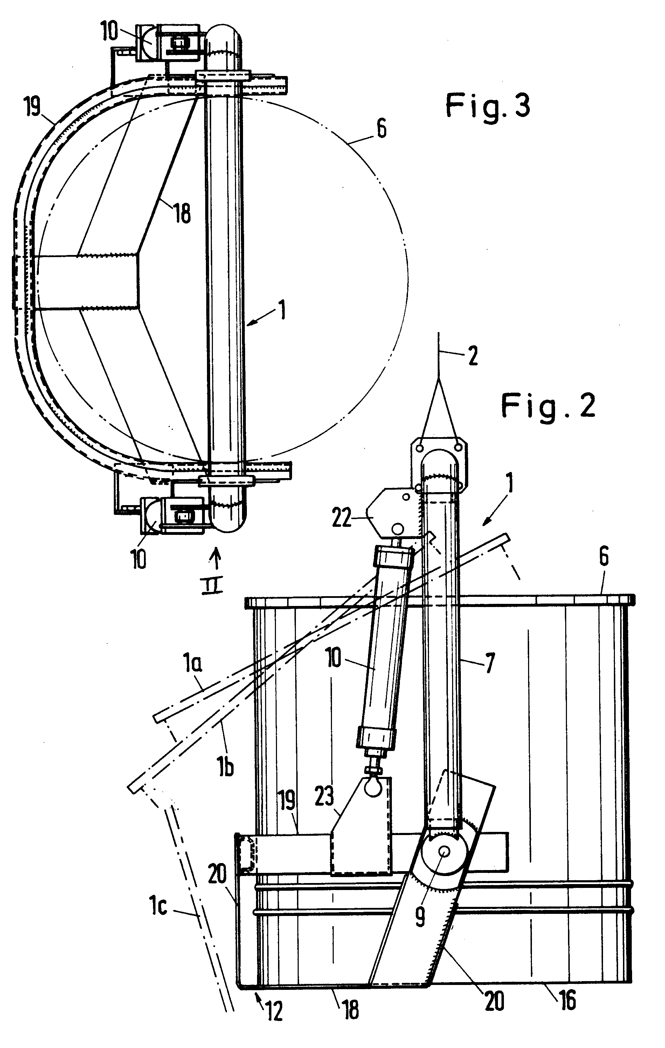

Das Verbindungselement 3 dient dazu, die Einrichtung mit ihrer Drehachse 9 quer zur Geradeausflugrichtung des Helikopters zu halten, sie ist aus der vorher genannten EP-A-0 004 955 bekannt. Der Transportbehälter 6 ist von einem an den Schenkeln 7 des Tragbügels 1 drehbar gelagerten Halter 12 gehalten, an dem der Drehantrieb angreift. Der Halter 12 hat zwei Lagerzapfen 13, die je in einem Drehlager 14 am freien Ende eines der Schenkel 7 gelagert sind. Der Halter 12 besteht im wesentlichen aus einem den Boden 16 des Behälters 6 unterstützenden Teil 18, einen den Behälter 6 an der Umfangshälfte an einer Seite des Tragbügels 1 umgreifenden Teil 19, in dessen Mitte und an dessen Enden der Behälter 6 seitlich abgestützt ist. Diese Teile 18 und 19 sind durch einen Arm 20 miteinander verbunden. Der Behälter 6 ist durch nicht dargestellte Mittel lösbar mit dem Halter 12 verbunden. Er kann beispielsweise durch einen an seiner anderen Umfangshälfte anliegenden, am Teil 19 befestigten Gurt radial und durch nach Art von Schnellverschlüssen ausgeführte Verbindungsvorrichtungen axial unverschiebbar am Halter 12 befestigt sein, um auch in geneigter Lage, vgl. 1a, 1b, 1c (Fig. 2) gehalten zu werden. Der Behälter 6 kann (nicht dargestellte) Füsse haben, damit er, bei entsprechend ausgeführtem Teil 18 mit Hilfe eines Gabelstaplers in den Halter 12 gesetzt und wieder weggenommen werden kann.

Die Zylinder-Kolben-Einheiten 10 sind doppeltwirkend und durch zwei (nicht dargestellte) Schläuche und ein im Helikopter angeordnetes (nicht dargestelltes) Steuerventil mit dem im Helikopter bereits für andere Zwecke vorhandenen Kompressor verbunden. Sie sind an einem Ende an einer Ausladung 22 am oberen Ende der Schenkel 7 und am anderen Ende an einer am Teil 19 des Halters 12 befestigten Platte 23 schwenkbar gelagert.

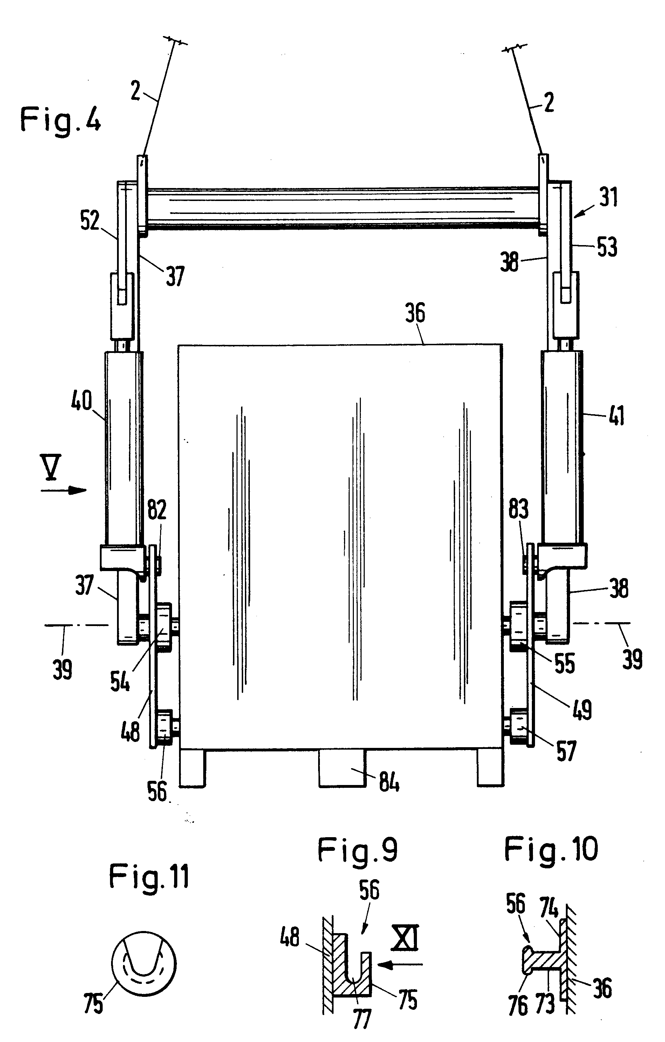

Bei der in Fig. 4-10 dargestellten Ausführungsart besteht der Halter aus zwei plattenförmigen Haltegliedern 48 und 49, die je an einem der Schenkel 37 und 38 des Tragbügels 31 drehbar gelagert, und durch in Fig. 6-11 näher dargestellte Verbindungselemente 54-57 lösbar mit dem Mantel des Behälters 36 verbunden sind. Dabei sind die ebenfalls doppelt wirkenden, fluidbetriebenen Zylinder-Kolben-Einheiten 40, 41 je an einer Ausladung 52 bzw. 53 am oberen Ende des Schenkel 37 bzw. 38 schwenkbar gelagert, sie greifen je an einen der Halteglieder 48 und 49 an und sind ebenso wie die Zylinder-Kolben-Einheiten 10 (Fig. 2 und 3) vom Helikopter aus angetrieben, wie vorstehend erläutert.

Das in Fig. 6-8 dargestellte Verbindungselement 54 besteht aus einem pilzförmigen Teil 60, der fest mit dem Mantel des Behälters 36 verbunden und zu diesem Zwecke mit einem Flansch 61 ausgeführt ist, und einem Teil 63, der den Kopf 64 des pilzförmigen Teils 60 aufnimmt und an einem fest mit dem Schenkel 37 des Tragbügels 31 verbundenen Bolzen 65 gebildet ist, der einen Lagerzapfen für das Halteglied 48 bildet. Der Pilzkopf 64 ist von oben in einen Hohlraum 66 des Teiles 63 einführbar, in diesem unten und seitlich abgestützt und nach oben aus dem Hohlraum 66 heraushebbar. Wie ersichtlich, sind die Teile 60 und 63 im zusammengefügten Zustand koaxial zur Drehachse 39. In diesem Zustand ist ein im Teil 63 koaxial verschiebbarer Stift 68 zum Eingreifen in eine Bohrung 69 des Teiles 60 verschiebbar, um den Pilzkopf 64 im Hohlraum 66 zu sichern. Für den Vor- und Rückschub des leicht verschiebbaren Stiftes 68 ist ein entsprechend kleiner (nicht näher dargestellter Fluidmotor 70 an der Aussenseite des Haltegliedes 48 angeordnet, der mit Druckluft des im Helikopter für andere Zwecke bereits vorhandenen Kompressors zu betreiben und durch ein oben am Tragbügel 1 angeordnetes (nicht dargestelltes) Steuerventil betätigbar ist, wenn die Einrichtung auf dem Boden steht. Das Verbindungselement 55 ist konstruktiv gleich dem Verbindungselement 54, es ist diesem diametral gegenüber mit seinem dem Flansch 61 entsprechenden Flansch am Behälter 36 und mit seinem dem Bolzen 65 entsprechenden Bolzen, auf dem das Halteglied 49 drehbar gelagert ist, am Schenkel 38 befestigt und mit einem dem Fluidmotor 70 entsprechenden Motor ausgerüstet.

Das in Fig. 9-11 dargestellte Verbindungselement 56 ist in Ruhelage des Behälters 36 in einem Abstand unter dem Verbindungselement 54 angeordnet. Es besteht ebenso wie dieses aus einem pilzförmigen Teil 73 mit einem am Behälter 36 befestigten Flansch 74 und einem Teil 75, der den Kopf 76 des pilzförmigen Teils 73 aufnimmt und abweichend vom Teil 63 des Haltegliedes 48 nicht mit dem Schenkel 37 des Tragbügels 31 sondern mit dem Halteglied 48 fest verbunden ist. In Ruhestellung des Haltegliedes 48 ist der Teil 75 in der in Fig. 9 und 11 dargestellten Lage, wobei der Pilzkopf 76 von oben in den Hohlraum 77 des Teiles 75 einsetzbar, in diesem unten und seitlich abstützbar und nach oben wieder herausnehmbar ist. Das Verbindungselement 57 ist dem Verbindungselement 56 diametral gegenüber am Behälter 36 angeordnet, sein dem Flansch 74 entsprechender Flansch ist mit dem Behälter und sein dem Teil 75 entsprechender Teil ist mit dem Halteglied 49 fest verbunden.

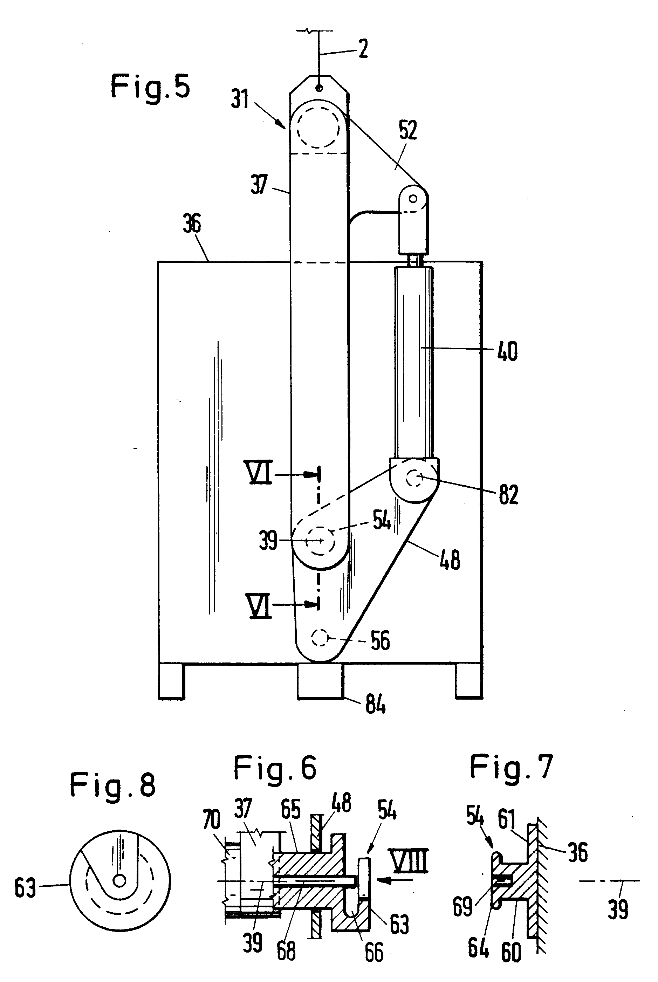

Die Kolben-Zylinder-Einheiten 40 und 41 sind einerseits an einer Ausladung 52 bzw. 53 am oberen Ende des Schenkels 37 bzw. 38 des Tragbügels 31 schwenkbar abgestützt und anderseits durch ein Drehgelenk 82 bzw. 83 mit dem Halteglied 48 bzw. 49 verbunden. Dabei schliesst die geometrische Achse der Zylinder-Kolben-Einheiten 40 und 41 mit der als Kurbel wirkenden Strecke zwischen dem Drehgelenk 82 bzw. 83 und dem Verbindungselement 54 bzw. 55 einen stumpfen Winkel ein, der abnimmt, wenn der Behälter 36 in Fig. 5 im Uhrzeigersinn gedreht wird. Dadurch ist der Tatsache Rechnung getragen, dass der von der Schwerkraft des Behälters 36 auf die Zylinder-Kolben-Einheiten 40 und 41 ausgeübte Zug bei dieser Drehung zunimmt. Dies gilt sinngemäss auch für die in Fig. 1-3 dargestellte Ausführungsart der Einrichtung. Die Zylinder-Kolben-Einheiten 40 und 41 ermöglichen es, den Behälter 36 mit einer gewünschten Geschwindigkeit zu drehen und in einer beliebigen Drehstellung zu halten. Sie sind ebenso wie die Fluidmotore 70 durch (in der Zeichnung nicht dargestellte) Druckmittelschläuche mit dem Kompressor des Helikopters verbunden. Diese Schläuche sind oberhalb des Tragbügels 31 (bzw. 1) zweckmässig längs der Tragseile 2 geführt und können zusammen mit jeweils einem Tragseil in einem Schutzschlauch, beispielsweise aus einem textilen Gewebe, verlaufen.

Der Behälter 36 hat an seinem Boden vorstehende Füsse 84, so dass die Gabel eines Gabelstaplers unter den auf eine Abstellfläche gestellten Behälter greifen kann.

## Patentansprüche

1. Transporteinrichtung zum Anhängen eines Transportbehälters (6; 36) an ein Luftfahrzeug, insbesondere einen Helikopter, mit einem an das Luftfahrzeug zu hängenden Tragbügel (1; 31), der den um eine horizontale Drehachse (9; 39) drehbaren Transportbehälter (6; 36) und einen Drehantrieb (10, 11; 40, 41) für diesen (6; 36) trägt, dadurch gekennzeichnet, dass der Transportbehälter (6; 36) von einem drehbar am Tragbügel (1; 31) gelagerten Halter (18-20; 48, 49) lösbar gehalten ist, an dem der am Tragbügel (1; 31) abgestützte Drehantrieb (10, 11; 40, 41) angreift.

2. Einrichtung nach Anspruch 1, dadurch gekennzeichnet, dass der Halter (18-20) einen den Boden (16) des Transportbehälters (6) unterstützenden Teil (18) und einen um eine Umfangshälfte an einer Seite des Tragbügels (1) greifenden Teil (19) hat, der mit den Behälter (6) am Halter (18-20) lösbar sichernden Mitteln ausgerüstet ist.

3. Einrichtung nach Anspruch 2, dadurch gekennzeichnet, dass der den Boden (16) des Transportbehälters (6) unterstützende Teil (18) des Halters (18-20) so ausgebildet und der Behälter (6) mit unten vorstehenden Füssen versehen ist, so dass die Gabel eines Gabelstaplers bei auf einer Abstellfläche abgestellter Einrichtung zwischen der Abstellfläche und dem Boden (16) des Transportbehälters (6) eingeführt werden kann.

4. Einrichtung nach Anspruch 1, dadurch gekennzeichnet, dass der Halter zwei Halteglieder (48, 49) hat, die je an einem Schenkel (37, 38) des Tragbügels (31) um die horizontale Drehachse (39) schwenkbar gelagert und lösbar mit dem Behälter (36) verbunden sind.

5. Einrichtung nach Anspruch 4, gekennzeichnet durch mindestens vier Verbindungselemente (54-57), die den Behälter (36) lösbar mit den Haltegliedern (48, 49) verbinden.

6. Einrichtung nach Anspruch 5, dadurch gekennzeichnet, dass jedes der Verbindungselemente aus einem am Behälter (36) befestigten, pilzförmigen Teil (60, 73) und einem den Pilzkopf (64, 76) aufnehmenden Teil (63, 75) besteht, in dem der Pilzkopf (64, 76) einführbar, abstützbar und herausnehmbar ist.

7. Einrichtung nach Anspruch 6, dadurch gekennzeichnet, dass zwei Verbindungselemente (54, 55) koaxial zur Drehachse (39) und mindestens zwei weitere Verbindungselemente (56, 57) in Ruhelage des Behälters (36) über oder unter jenen Verbindungselementen (54, 55) angeordnet sind.

8. Einrichtung nach Anspruch 7, dadurch gekennzeichnet, dass der den Pilzkopf (64) aufnehmende Teil (63) der zur Drehachse (39) koaxialen Verbindungselemente (54, 55) einen mit einem der Schenkel (37, 38) fest verbundenen Bolzen (65) aufweisen, um den eines der Halteglieder (48, 49) drehbar gelagert ist, und dass die je einen Pilzkopf (76) aufnehmenden Teile (57) der in Ruhelage des Behälters (36) ober- oder unterhalb der Drehachse (39) angeordneten Verbindungselemente (56, 57) fest mit einem der Halteglieder (48, 49) verbunden sind.

9. Einrichtung nach Anspruch 7, dadurch gekennzeichnet, dass der pilzförmige Teil (60) mindestens der zur Drehachse (39) koaxialen Verbindungselemente (54, 55) mit einem zentralen Loch (69) versehen ist, und dass in dem deren Pilzkopf (64) aufnehmenden Teil (63) ein zur Drehachse (36) koaxialer Stift (68) zum Eingreifen in das Loch (69) verschiebbar gelagert ist.

10. Einrichtung nach einem der Ansprüche 4-9, dadurch gekennzeichnet, dass zwei fluidbetriebene, doppelt wirkende Kolben-Zylinder-Einheiten (40, 41) je an einem Schenkel (37, 38) des Tragbügels (31) abgestützt sind und an dem an diesem Schenkel (37, 38) drehbar gelagerten Halteglied (48, 49) zum Drehen der Halteglieder (48, 49) mit dem Behälter (36) angreifen.

11. Einrichtung nach einem der Ansprüche 4-10, dadurch gekennzeichnet, dass der Behälter (36) mit Füssen (84) ausgeführt ist, so dass die Gabel eines Gabelstaplers unter den auf einer Abstellfläche abgestellten Behälter (36) greifen kann.

## Claims

1. Transport device for suspending a container (6; 36) from an aircraft, in particular a helicopter, with a carrier frame (1; 31) for suspending from the aircraft, which carrier frame carries the container (6; 36), rotatable about a horizontal rotary shaft (9; 39) and a rotary drive (10, 11; 40, 41) for this container (6; 36), characterised in that the container (6; 36) is detachably retained by a holder (18-20; 48, 49) mounted rotatably on the carrier frame (1; 31), on which holder the rotary drive (10, 11; 40, 41) carried on the carrier frame (1; 31) engages.

2. Device according to Claim 1, characterised in that the holder (18-20) has a part (18) supporting the floor (16) of the container (6) and a part (19) which engages around one half of the periphery of the carrier frame (1), and is provided with means detachably securing the container (6) on the holder (18-20).

3. Device according to Claim 2, characterised in that the part (18) of the holder (18-20) supporting the floor (16) of the container (6) is formed in such a way, and the container (6) so provided with downwardly projecting feet, that the fork of a fork lift may be introduced between the depositing surface and the floor (16) of the container (6) when the device is set down upon a supporting surface.

4. Device according to Claim 1, characterised in that the holder has two retaining members (48, 49), which are each mounted on one leg (37, 38) of the carrier frame (31) so as to pivot about the horizontal rotary shaft (39) and are detachably connected to the container (36).

5. Device according to Claim 4, characterised by at least four connection elements (54-57), which detachably connect the container (36) to the retaining members (48, 49).

6. Device according to Claim 5, characterised in that each of the connecting elements consists of a mushroom-shaped part (60, 73) secured to the container (36), and a part (63, 75) receiving the mushroom head (64, 76), in which part the mushroom head (64, 76) may be introduced and supported and from which part it may be removed.

7. Device according to Claim 6, characterised in that two connection elements (54, 55) are disposed coaxial to the rotary shaft (39), and at least two further connection elements (56, 57) are disposed above or below each of the connection elements (54, 55) when the container (36) is in the rest position.

8. Device according to Claim 7, characterised in that the part (63) of the connection elements (54, 55) coaxial to the rotary shaft (39) and receiving the mushroom head (64) has a bolt (65) that is securely connected to one of the legs (37, 38), about which bolt one of the retaining members (48, 49) is rotatably mounted, and in that each of the parts (57) of the connection elements (56, 57) which receive the mushroom head and which are disposed above or below the rotary shaft (39) in the rest position of the container (36) are securely connected to one of the retaining members (48, 49).

9. Device according to Claim 7, characterised in that the mushroom-shaped part (60), of at least the connection elements (54, 55) that are coaxial to the rotary shaft (39), is provided with a central aperture (69), and in that in the part (63) thereof receiving the mushroom head (64), a pin (68) coaxial to the rotary shaft (36), for engaging in the aperture (69) is displaceably mounted.

10. Device according to one of Claims 4 to 9, characterised in that two fluid operated, dual effect, piston cylinder units (40, 41) are each supported on one leg (37, 38) of the carrier frame (31), and engage on the retaining member (48, 49) rotatably mounted on this leg, to rotate the retaining member (48, 49) with the container (36).

11. Device according to one of Claims 4 to 10, characterised in that the container (36) is provided with feet (84), such that the fork of a fork lift can engage under the container (36) which has been set down on a supporting surface.

**Revendications**

1. Dispositif de transport destiné à suspendre un récipient de transport (6; 36) à un appareil de transport aérien, en particulier à un hélicoptère, comportant un arceau porteur, (1; 31) qui est à suspendre à l'appareil de transport aérien et qui porte le récipient de transport (6; 36), monté à rotation autour d'un axe de rotation horizontal (9; 39), et un entraînement à rotation (10, 11; 40, 41) pour ce dernier (6; 36), caractérisé en ce que le récipient de transport (6; 36) est maintenu de façon détachable par un support (18 - 20; 48, 49), monté à rotation sur l'arceau porteur (1; 31) et sur lequel agit l'entraînement à rotation (10, 11; 40, 41) porté sur l'arceau porteur (1; 31).

2. Dispositif selon la revendication 1, caractérisé en ce que le support (18 - 20) comporte un élément (18) supportant le fond (16) du récipient de transport (6) et un élément (19) qui enserre une demi-périphérie d'un côté de l'arceau porteur (1) et qui est équipé de moyens assurant de manière détachable le récipient (6) sur le support (18 à 20).

3. Dispositif selon la revendication 2, caractérisé en ce que l'élément (18) du support (18 - 20), qui supporte le fond (16) du récipient de transport (6), est réalisé de telle manière que la fourche d'un chariot à fourche peut être introduite entre une surface d'arrêt et le fond (16) du récipient de transport (6) lorsque le dispositif est appliqué sur la surface d'arrêt, et en ce que le récipient (6) est pourvu à cet effet de pieds en saillie vers le bas.

4. Dispositif selon la revendication 1, caractérisé en ce que le support comporte deux organes de support (48, 49) qui sont logés chacun à pivotement autour de l'axe de rotation horizontal (39) sur une branche (37, 38) de l'arceau porteur (31), qui sont reliés chacun de façon détachable au récipient (36).

5. Dispositif selon la revendication 4, caractérisé par au moins quatre éléments de liaison (54 à 57) qui relient de façon détachable le récipient (36) aux organes de support (48, 49).

6. Dispositif selon la revendication 5, caractérisé en ce que chacun des éléments de liaison se compose d'un élément en forme de champignon (60, 73) fixé sur le récipient (36) et d'un élément récepteur (63, 75) de la tête de champignon (64, 76) dans lequel cette tête (64, 76) peut être introduite et supportée, et duquel elle peut être enlevée.

7. Dispositif selon la revendication 6, caractérisé en ce que deux éléments de liaison (54, 55) sont disposés de manière coaxiale avec l'axe de rotation (39) et ce qu'en au moins deux autres éléments de liaison (56, 57) sont disposés au-dessus ou au-dessous de ces éléments de liaison (54, 55), dans la position de repos du récipient (36).

8. Dispositif selon la revendication 7, caractérisé en ce que l'élément récepteur (63) de la tête de champignon (64) de chacun des éléments de liaison (54, 55), coaxiaux à l'axe (39), comporte un goujon (65), relié de façon fixe à la branche (37, 38) autour duquel est logé à rotation l'un des organes de support (48, 49), et en ce que les éléments (57), récepteurs chacun d'une tête de champignon (76) des éléments de liaison (56, 57) disposés au-dessus ou au-dessous de l'axe de rotation (39) dans la position de repos du récipient (36), sont reliés de façon fixe avec l'un des organes de support (48, 49).

9. Dispositif selon la revendication 7, caractérisé en ce que au moins l'élément (60) en forme de champion, des éléments (54, 55), coaxiaux à l'axe de rotation (39), est pourvu d'un trou central (69) et en ce qu'une tige (68), coaxiale à l'axe de rotation (36), est logée à coulissement dans l'élément récepteur (63) de la tête de champignon (64) de l'élément (54, 55), afin de pénétrer dans le trou (69).

10. Dispositif selon l'une des revendications 4 à 9, caractérisé en ce que deux ensembles à piston et cylindre (40, 41) à double effet, à entraînement fluidique, s'appuient chacun sur une branche 37, 38 de l'arceau porteur (31) et agissent sur l'organe de support (48, 49) logé à rotation sur cette branche (37, 38) pour faire tourner les organes de support (48, 49) avec le récipient (36).

11. Dispositif selon l'une des revendications 4 à 10, caractérisé en ce que le récipient (36) comporte des pieds (84) de façon que la fourche d'un chariot à fourche puisse passer au-dessous du récipient (36), appliqué sur une

surface d'arrêt.

## Fig.1

EP 0 300 188 B1

Fig. 3

Fig. 2

9

Fig.4

Fig.11

Fig.9

Fig.10

Fig.5

Fig.8

Fig.6

Fig.7